# FASCICULE DE BREVET EUROPEEN

(11) **EP 3 695 087 B1**
(45) Date de publication et mention de la délivrance du brevet: **17.11.2021**
(21) Numéro de dépôt: 18793367.6
(22) Date de dépôt: 09.10.2018
(51) Int. Cl.: E06B 9/50, E06B 9/72, H02K 15/14

(54) **ACTIONNEUR ÉLECTROMÉCANIQUE TUBULAIRE, INSTALLATION DOMOTIQUE COMPRENANT UN TEL ACTIONNEUR ET PROCÉDÉ D'ASSEMBLAGE D'UN TEL ACTIONNEUR**
ROHRFÖRMIGER ELEKTROMECHANISCHER AKTUATOR, HEIMAUTOMATISIERUNGSAUSRÜSTUNG MIT SOLCH EINEM AKTUATOR UND VERFAHREN ZUR VERBINDUNG SOLCH EINES AKTUATORS
TUBULAR ELECTROMECHANICAL ACTUATOR, HOME AUTOMATION EQUIPMENT COMPRISING SUCH AN ACTUATOR AND METHOD FOR CONNECTING SUCH AN ACTUATOR

(30) Priorité: 10.10.2017 FR 1759470
(43) Date de publication de la demande: 19.08.2020
(73) Titulaire: Somfy Activites SA, 74300 Cluses (FR)
(72) Inventeur: SONZINI, Marc, 74200 Allinges (FR); DOCHE, Florian, 74000 Annecy (FR)
(74) Mandataire: Lavoix
(86) Numéro de dépôt international: PCT/EP2018/077468
(87) Numéro de publication internationale: WO 2019/072842

(56) Documents cités:
- FR-A1- 2 983 368
- JP-A- 2000 160 969

## Description

La présente invention concerne un actionneur électromécanique tubulaire, une installation domotique de fermeture ou de protection solaire comprenant un tel actionneur, ainsi qu'un procédé d'assemblage d'un tel actionneur.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document FR 2 983 368 A1 qui décrit un actionneur électromécanique tubulaire pour une installation domotique de fermeture ou de protection solaire. L'actionneur électromécanique comprend un moteur électrique, un carter, un élément d'obturation et une couronne. Le carter est creux et configuré pour loger le moteur électrique. Le carter comprend une première extrémité et une deuxième extrémité. La deuxième extrémité est opposée à la première extrémité. L'élément d'obturation est configuré pour obturer la deuxième extrémité du carter. La couronne est disposée autour du carter et au niveau de la deuxième extrémité du carter.

Une solution connue pour l'assemblage de la couronne par rapport au carter et à l'élément d'obturation est d'utiliser une couronne réalisée sous la forme d'une pièce monobloc.

Dans un tel cas, l'élément d'obturation comprend deux pièces réalisées dans une matière plastique. La première pièce de l'élément d'obturation comprend une première partie de l'élément d'obturation configurée pour coopérer avec le carter de l'actionneur électromécanique. La deuxième pièce de l'élément d'obturation comprend une deuxième partie de l'élément d'obturation configurée pour coopérer avec un support, en particulier une joue, d'un coffre d'un dispositif d'occultation.

La première pièce de l'élément d'obturation comprend des logements configurés pour coopérer avec des plots de la deuxième pièce de l'élément d'obturation.

L'assemblage d'un tel actionneur électromécanique comprend une étape d'assemblage de la couronne par rapport à la première pièce de l'élément d'obturation, de sorte à former un sous-ensemble, une étape d'assemblage du sous-ensemble constitué de la couronne et de la première pièce de l'élément d'obturation par rapport au carter, une étape d'assemblage de la deuxième pièce de l'élément d'obturation par rapport à la première pièce de l'élément d'obturation puis une étape de fixation des première et deuxième pièces de l'élément d'obturation par rapport au carter.

L'étape d'assemblage du sous-ensemble constitué de la couronne et de la première pièce de l'élément d'obturation par rapport au carter est mise en oeuvre par emboîtement de la première pièce de l'élément d'obturation par rapport au carter et par emmanchement de crans de la première pièce de l'élément d'obturation à l'intérieur d'échancrures du carter, ménagées au niveau de la deuxième extrémité du carter.

L'étape d'assemblage de la deuxième pièce de l'élément d'obturation par rapport à la première pièce de l'élément d'obturation est mise en oeuvre par emboîtement des plots de la deuxième pièce de l'élément d'obturation à l'intérieur des logements de la première pièce de l'élément d'obturation.

En outre, l'étape de fixation des première et deuxième pièces de l'élément d'obturation par rapport au carter est mise en oeuvre par des vis de fixation traversant des premiers trous de passage ménagés dans la couronne et des deuxièmes trous de passage ménagés dans le carter et vissées dans des premiers trous de fixation de la deuxième pièce de l'élément d'obturation et des deuxièmes trous de fixation de la première pièce de l'élément d'obturation.

La couronne est donc montée, d'une part, sur la première pièce de l'élément d'obturation et, d'autre part, sur le carter.

Cependant, cet actionneur électromécanique présente l'inconvénient de réaliser l'élément d'obturation en deux pièces comprenant respectivement des éléments de maintien coopérant ensemble, en particulier des plots et des logements, de sorte à permettre le montage de la couronne réalisée sous la forme d'une pièce monobloc par rapport au carter et à l'élément d'obturation.

Par conséquent, un tel assemblage de l'actionneur électromécanique est complexe à mettre en œuvre.

En outre, l'obtention de l'élément d'obturation au moyen de deux pièces emboîtables engendre des défauts de tenue en flexion de l'actionneur électromécanique par rapport au support du dispositif d'occultation et des difficultés de dimensionnement mécanique des deux pièces de l'élément d'obturation, pouvant provoquer des problèmes de déformation plastique des deux pièces de l'élément d'obturation, en particulier de fluage.

Par conséquent, l'élément d'obturation au moyen de deux pièces emboîtables présente des défauts de rigidité.

Par ailleurs, le coût d'obtention de l'actionneur électromécanique est élevé.

La présente invention a pour but de résoudre les inconvénients précités et de proposer un actionneur électromécanique tubulaire, une installation domotique de fermeture ou de protection solaire comprenant un tel actionneur, ainsi qu'un procédé d'assemblage d'un tel actionneur, permettant de simplifier l'assemblage d'une couronne par rapport à l'élément d'obturation et un carter de l'actionneur électromécanique, tout en minimisant les coûts d'obtention de l'actionneur électromécanique, ainsi que les risques de défauts qualité de l'actionneur électromécanique.

A cet effet, la présente invention vise, selon un premier aspect, un actionneur électromécanique tubulaire pour une installation domotique de fermeture ou de protection solaire, l'actionneur électromécanique comprenant au moins :
- un moteur électrique,
- un carter, le carter étant creux et configuré pour loger au moins le moteur électrique, le carter comprenant une première extrémité et une deuxième extrémité, la deuxième extrémité étant opposée à la première extrémité,
- un élément d'obturation, l'élément d'obturation étant configuré pour obturer la deuxième extrémité du carter, l'élément d'obturation comprenant des crans configurés pour coopérer avec des échancrures du carter, les échancrures étant ménagées au niveau de la deuxième extrémité du carter, et
- une couronne, la couronne étant disposée au moins autour du carter et au niveau de la deuxième extrémité du carter, la couronne étant une pièce monobloc.

Selon l'invention, la couronne comprend :
∘ des dégagements, les dégagements de la couronne étant configurés pour coopérer avec les crans de l'élément d'obturation, lors de l'assemblage de la couronne avec l'élément d'obturation, et
∘ une butée, la butée étant configurée pour coopérer avec les crans de l'élément d'obturation, suite à l'assemblage de la couronne avec l'élément d'obturation et à un mouvement de rotation de la couronne par rapport à l'élément d'obturation, de sorte à bloquer en translation la couronne par rapport à l'élément d'obturation.

Ainsi, l'assemblage de l'actionneur électromécanique est simplifié, tout en minimisant les coûts d'obtention de l'actionneur électromécanique, ainsi que les risques de défauts qualité de l'actionneur électromécanique, puisque la couronne est de type monobloc et présente des dégagements configurés pour coopérer avec les crans de l'élément d'obturation, lors de l'assemblage de la couronne avec l'élément d'obturation, et puisque la butée est configurée pour coopérer avec les crans de l'élément d'obturation, dans une configuration assemblée de l'actionneur électromécanique.

En outre, un tel actionneur électromécanique comprend une couronne monobloc, c'est-à-dire sans ouverture selon son axe longitudinal pour permettre l'assemblage de celle-ci par rapport au carter et à l'élément d'obturation, de sorte à s'affranchir d'un élément de fermeture d'un premier bord d'une ouverture de la couronne par rapport à un deuxième bord de l'ouverture de la couronne, en particulier d'une agrafe.

Selon une caractéristique avantageuse de l'invention, l'élément d'obturation est une pièce monobloc. En outre, l'élément d'obturation comprend une première partie configurée pour coopérer avec le carter et une deuxième partie configurée pour coopérer avec un support.

Selon une autre caractéristique avantageuse de l'invention, la butée de la couronne est formée par une nervure s'étendant radialement à partir d'une surface interne de la couronne vers un axe longitudinal de la couronne.

Selon une autre caractéristique avantageuse de l'invention, la butée de la couronne s'étend axialement, suivant une direction parallèle à l'axe longitudinal de la couronne. En outre, la butée de la couronne présente une longueur inférieure à une distance entre une butée de l'élément d'obturation et un bord des crans de l'élément d'obturation, opposé à cette butée.

Selon une autre caractéristique avantageuse de l'invention, la butée de l'élément d'obturation est configurée pour coopérer avec le carter, au niveau de la deuxième extrémité du carter, dans la configuration assemblée de l'actionneur électromécanique.

Selon une autre caractéristique avantageuse de l'invention, chaque dégagement de la couronne est formé par un évidement ménagé dans la butée de la couronne.

Selon une autre caractéristique avantageuse de l'invention, l'élément d'obturation et le carter sont assemblés entre eux au moyen d'éléments de fixation.

Selon une autre caractéristique avantageuse de l'invention, les éléments de fixation sont des vis de fixation. Dans une configuration assemblée de l'actionneur électromécanique, les éléments de fixation traversent des trous de passage ménagés dans le carter et sont vissés dans des trous de fixation de l'élément d'obturation. En outre, les éléments de fixation traversent des trous de passage ménagés dans la couronne.

La présente invention vise, selon un deuxième aspect, une installation domotique de fermeture ou de protection solaire comprenant un écran enroulable sur un tube d'enroulement entraîné en rotation par un actionneur électromécanique tubulaire conforme à l'invention.

Cette installation domotique présente des caractéristiques et avantages analogues à ceux décrits précédemment en relation avec l'actionneur électromécanique tubulaire tel que mentionné ci-dessus.

La présente invention vise, selon un troisième aspect, un procédé d'assemblage d'un actionneur électromécanique tubulaire pour une installation domotique de fermeture ou de protection solaire,

l'actionneur électromécanique comprenant au moins :
- un moteur électrique,
- un carter, le carter étant creux et configuré pour loger au moins le moteur électrique, le carter comprenant une première extrémité et une deuxième extrémité, la deuxième extrémité étant opposée à la première extrémité,
- un élément d'obturation, l'élément d'obturation étant configuré pour obturer la deuxième extrémité du carter, l'élément d'obturation comprenant des crans configurés pour coopérer avec des échancrures du carter, les échancrures étant ménagées au niveau de la deuxième extrémité du carter, et
- une couronne, la couronne étant disposée au moins autour du carter et au niveau de la deuxième extrémité du carter, la couronne étant une pièce monobloc.

Le procédé comprend au moins les étapes suivantes :
- assemblage de la couronne par rapport à l'élément d'obturation, et
- assemblage du carter par rapport à l'élément d'obturation et à la couronne.

Selon l'invention, le procédé comprend également au moins :
- lors de l'étape d'assemblage de la couronne par rapport à l'élément d'obturation, une étape de positionnement de dégagements de la couronne par rapport aux crans de l'élément d'obturation, une première étape de déplacement de la couronne par rapport à l'élément d'obturation par un mouvement de translation des dégagements de la couronne par rapport aux crans de l'élément d'obturation, puis une deuxième étape de déplacement de la couronne par rapport à l'élément d'obturation par un mouvement de rotation, de sorte à bloquer en translation la couronne par rapport à l'élément d'obturation par la mise en appui d'une butée de la couronne contre les crans de l'élément d'obturation, et
- lors de l'étape d'assemblage du carter par rapport à l'élément d'obturation et à la couronne, une étape d'insertion du carter entre l'élément d'obturation et la couronne, puis une étape d'introduction des crans de l'élément d'obturation à l'intérieur des échancrures ménagées au niveau de la deuxième extrémité du carter.

Ce procédé d'assemblage d'un actionneur électromécanique tubulaire présente des caractéristiques et avantages analogues à ceux décrits précédemment en relation avec l'actionneur électromécanique tubulaire selon l'invention et tel que mentionné ci-dessus.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation domotique conforme à un mode de réalisation de l'invention ;
- la figure 2 est une vue schématique en perspective de l'installation domotique illustrée à la figure 1 ;
- la figure 3 est une vue schématique en coupe axiale et partielle de l'installation domotique illustrée aux figures 1 et 2 montrant un actionneur électromécanique tubulaire de l'installation ;
- la figure 4 est une vue schématique en coupe de l'actionneur électromécanique illustré à la figure 3, selon un plan de coupe décalé par rapport à un axe longitudinal de l'actionneur ;
- la figure 5 est une vue schématique en coupe partielle de l'actionneur électromécanique illustré à la figure 3, selon un plan de coupe passant par l'axe longitudinal de l'actionneur ;
- la figure 6 est une vue schématique en coupe et en perspective d'une partie de l'actionneur électromécanique illustré aux figures 4 et 5, représentant un élément d'obturation, un élément d'interface et un élément d'inhibition ;
- la figure 7 est une vue schématique en coupe et en perspective d'une partie de l'actionneur électromécanique illustré aux figures 4 et 5, représentant une partie d'un carter de l'actionneur électromécanique, l'élément d'obturation et une couronne ;
- la figure 8 est une vue schématique éclatée et en perspective d'une partie de l'actionneur électromécanique illustré aux figures 4 et 5, représentant une partie du carter de l'actionneur électromécanique, la couronne et l'élément d'obturation ;
- la figure 9 est une vue schématique éclatée et en perspective d'une partie de l'actionneur électromécanique illustré aux figures 4 et 5, représentant une partie du carter de l'actionneur électromécanique, un réducteur, un arbre de sortie, un embout et un élément de maintien ;
- la figure 10 est une vue schématique éclatée et en perspective d'une partie de l'actionneur électromécanique illustré aux figures 4 et 5, représentant une partie du carter de l'actionneur électromécanique, la couronne, l'élément d'obturation, l'élément d'interface et l'élément d'inhibition ; et
- la figure 11 est une vue schématique de l'actionneur électromécanique illustré aux figures 4 et 5, représentative d'un procédé d'assemblage de cet actionneur.

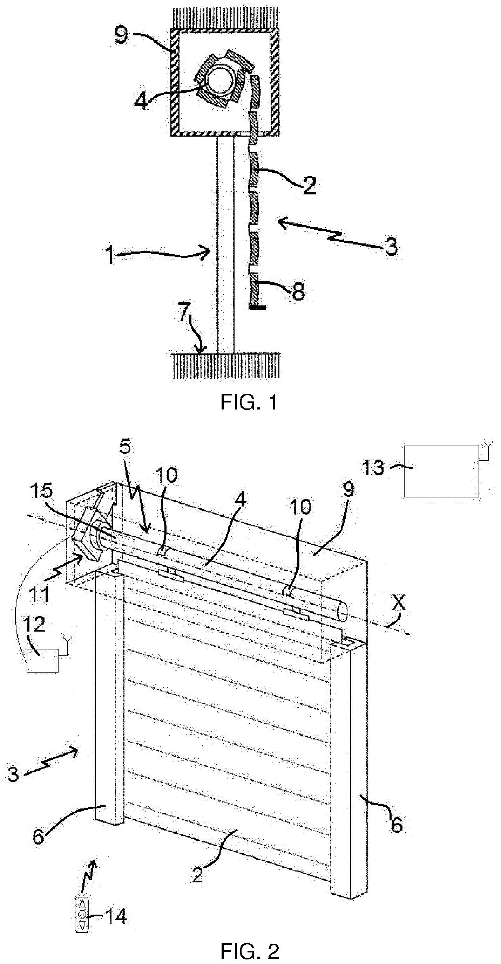

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On décrit, en référence aux figures 1 et 2, un volet roulant conforme à un mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

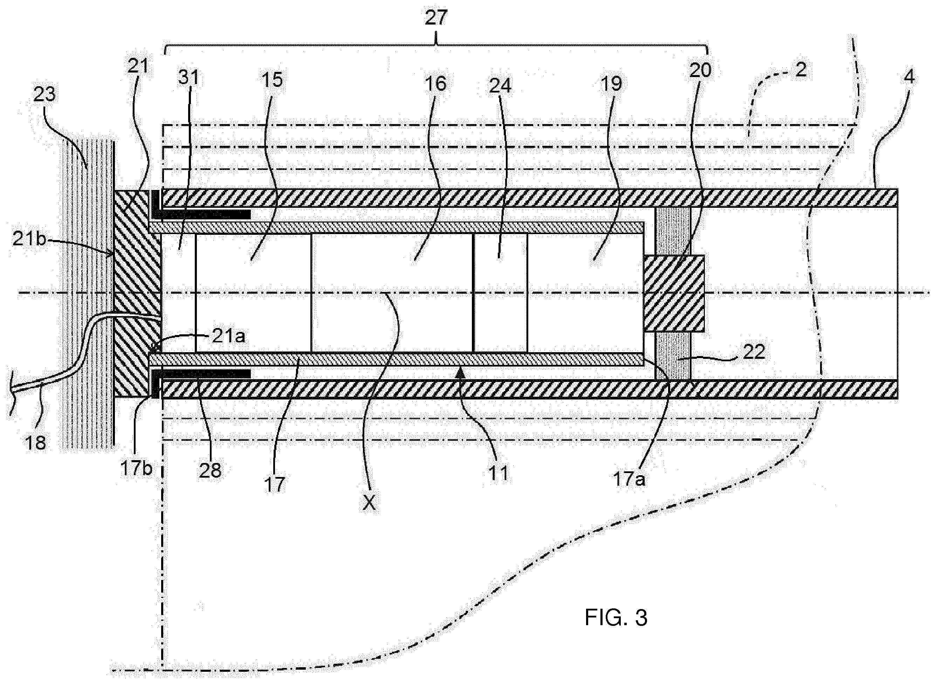

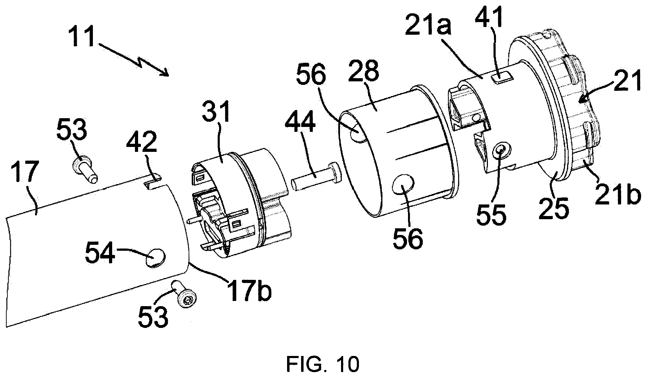

On décrit à présent, plus en détail et en référence aux figures 3 à 11, l'actionneur électromécanique 11 appartenant à l'installation domotique des figures 1 et 2.

L'actionneur électromécanique 11 comprend un moteur électrique 16.

En outre, l'actionneur électromécanique 11 peut comprendre une unité électronique de contrôle 15, un réducteur 19 et un arbre de sortie 20.

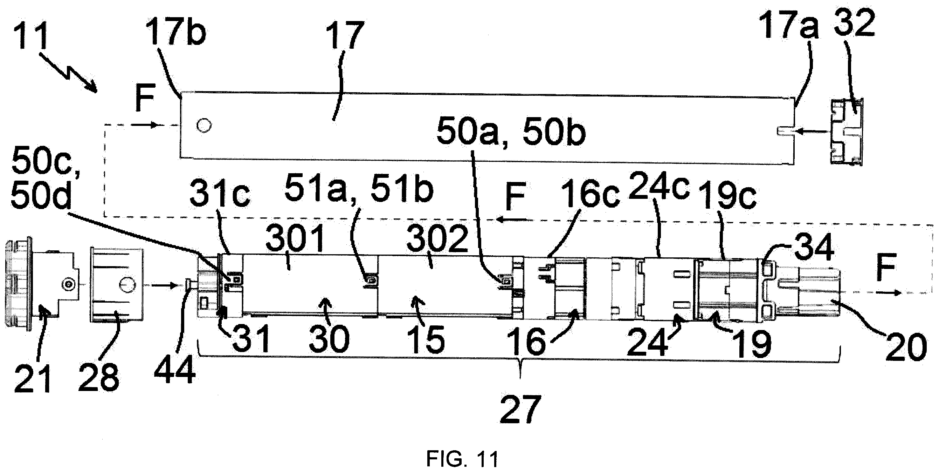

Ici, l'unité électronique de contrôle 15, le moteur électrique 16, le réducteur 19 et l'arbre de sortie 20 forment un ensemble 27, tel qu'illustré aux figures 3 et 11.

Ainsi, l'ensemble 27 est formé par des organes de l'actionneur électromécanique 11, dont l'unité électronique de contrôle 15, le moteur électrique 16, le réducteur 19 et l'arbre de sortie 20 font partie intégrante.

Le moteur électrique 16 comprend un rotor et un stator, non représentés, positionnés de manière coaxiale autour d'un axe de rotation X, qui est également l'axe de rotation du tube d'enroulement 4 en configuration montée du dispositif d'entraînement motorisé 5.

Ici, le réducteur 19 est du type à engrenages.

En pratique, le moteur électrique 16 comprend un arbre de sortie, non représenté, configuré pour coopérer avec un arbre d'entrée, non représenté, du réducteur 19, dans la configuration assemblée de l'actionneur électromécanique 11.

Des moyens de commande de l'actionneur électromécanique 11, permettant le déplacement de l'écran 2 du dispositif d'occultation 3, comprennent au moins l'unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres, en particulier d'ordres radioélectriques émis par un émetteur d'ordres, tel que la télécommande 14 destinée à commander l'actionneur électromécanique 11 ou l'une des unités de commande locale 12 ou centrale 13.

Le module de réception d'ordres peut également permettre la réception d'ordres transmis par des moyens filaires.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 comprend également un carter 17, en particulier de forme tubulaire.

Le carter 17 de l'actionneur électromécanique 11 est, préférentiellement, de forme cylindrique et, plus particulièrement, de section circulaire.

Dans un mode de réalisation, le carter 17 est réalisé dans un matériau électriquement conducteur, notamment métallique.

La matière du carter de l'actionneur électromécanique n'est pas limitative et peut être différente. Il peut, en particulier, s'agir d'une matière plastique.

Le carter 17 est creux et configuré pour loger le moteur électrique 16 et, éventuellement, l'unité électronique de contrôle 15 et le réducteur 19. En outre, le carter 17 peut, éventuellement, être configuré pour loger en partie l'arbre de sortie 20.

Le carter 17 comprend une première extrémité 17a et une deuxième extrémité 17b. La deuxième extrémité 17b est opposée à la première extrémité 17a.

L'arbre de sortie 20 de l'actionneur électromécanique 11 dépasse du carter 17 au niveau de la première extrémité 17a du carter 17, dans la configuration assemblée de l'actionneur électromécanique 11.

Ainsi, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, l'arbre de sortie 20 de l'actionneur électromécanique 11 est accouplé, par un élément de liaison 22, au tube d'enroulement 4, en particulier un élément de liaison en forme de roue.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique à partir du réseau d'alimentation électrique du secteur.

Avantageusement, l'actionneur électromécanique 11 comprend également un frein 24.

Ici, le frein 24 de l'actionneur électromécanique 11 fait partie intégrante de l'ensemble 27.

A titre d'exemple nullement limitatif, le frein 24 peut être un frein à ressort, un frein à came ou un frein électromagnétique.

Avantageusement, l'actionneur électromécanique 11 peut également comprendre un dispositif de détection de fin de course et/ou d'obstacle, pouvant être mécanique ou électronique.

L'actionneur électromécanique 11 comprend également un élément d'obturation 21. L'élément d'obturation 21 est configuré pour obturer la deuxième extrémité 17b du carter 17.

L'élément d'obturation 21 dépasse du carter 17 au niveau de la deuxième extrémité 17b du carter 17, dans la configuration assemblée de l'actionneur électromécanique 11.

En pratique, l'élément d'obturation 21 est disposé à une extrémité de l'actionneur électromécanique 11 opposée à celle au niveau de laquelle l'arbre de sortie 20 fait saillie à partir du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

Avantageusement, l'élément d'obturation 21 est réalisé en matière plastique et, plus particulièrement, par moulage.

Préférentiellement et comme illustré aux figures 3 à 11, l'élément d'obturation 21 est une pièce monobloc, c'est-à-dire une unique pièce.

Ici, l'élément d'obturation 21 est une pièce de révolution.

L'élément d'obturation 21 comprend une première partie 21a configurée pour coopérer avec le carter 17 de l'actionneur électromécanique 11 et une deuxième partie 21b configurée pour coopérer avec le support 23.

Ainsi, la réalisation de l'élément d'obturation 21 comprenant les première et deuxième parties 21a, 21b en une seule pièce permet d'améliorer la rigidité de l'élément d'obturation 21.

Au moins une partie de la première partie 21a de l'élément d'obturation 21 est de forme générale cylindrique et est disposée à l'intérieur du carter 17 de l'actionneur électromécanique 11, dans la configuration assemblée de l'actionneur électromécanique 11.

Préférentiellement, le diamètre extérieur 0212 de la deuxième partie 21b de l'élément d'obturation 21 est supérieur au diamètre extérieur Ø17 du carter 17 de l'actionneur électromécanique 11.

Avantageusement, l'élément d'obturation 21 comprend une butée 25 configurée pour coopérer avec le carter 17, au niveau de la deuxième extrémité 17b du carter 17, dans la configuration assemblée de l'actionneur électromécanique 11, par l'intermédiaire d'une couronne 28.

Ainsi, la butée 25 de l'élément d'obturation 21 permet de limiter l'enfoncement de la première partie 21a de l'élément d'obturation 21 dans le carter 17.

En outre, la butée 25 de l'élément d'obturation 21 délimite les première et deuxième parties 21a, 21b de l'élément d'obturation 21.

Ainsi, seule la première partie 21a de l'élément d'obturation 21 est disposée à l'intérieur du carter 17 de l'actionneur électromécanique 11, suite à l'emmanchement de l'élément d'obturation 21 à l'intérieur du carter 17, jusqu'à la butée 25.

Ici, la butée 25 de l'élément d'obturation 21 est réalisée sous la forme d'une collerette, en particulier de forme cylindrique et plane.

L'actionneur électromécanique 11 comprend la couronne 28, comme illustré aux figures 3 à 5, 7, 8, 10 et 11. La couronne 28 est disposée au moins autour du carter 17 de l'actionneur électromécanique 11 et au niveau de la deuxième extrémité 17b du carter 17.

Ici, le tube d'enroulement 4 est entraîné en rotation autour de l'axe de rotation X et du carter 17 de l'actionneur électromécanique 11 soutenu par l'intermédiaire de deux liaisons pivot. La première liaison pivot est réalisée au niveau d'une première extrémité du tube d'enroulement 4 au moyen de la couronne 28. La couronne 28 permet ainsi de réaliser un palier. La deuxième liaison pivot, non représentée, est réalisée au niveau d'une deuxième extrémité du tube d'enroulement 4.

La couronne 28 est une pièce monobloc, c'est-à-dire une unique pièce, en particulier sans ouverture s'étendant suivant un axe longitudinal X28 de la couronne 28.

Ici, dans la configuration assemblée de l'actionneur électromécanique 11, l'axe longitudinal X28 de la couronne 28 est aligné avec l'axe de rotation X de l'actionneur électromécanique 11.

L'élément d'obturation 21 et, plus particulièrement, la première partie 21a de l'élément d'obturation 21 comprend des crans 41, chacun en forme de saillie radiale, configurés pour coopérer avec des premières échancrures 42 du carter 17. Les premières échancrures 42 sont ménagées au niveau de la deuxième extrémité 17b du carter 17.

Ici, la première partie 21a de l'élément d'obturation 21 comprend deux crans 41 diamétralement opposés par rapport à l'axe longitudinal X21 et, plus particulièrement, par rapport à l'axe de rotation X, dans la configuration assemblée de l'actionneur électromécanique 11. En outre, le carter 17 comprend deux premières échancrures 42 diamétralement opposées, par rapport à l'axe de rotation X, dans la configuration assemblée de l'actionneur électromécanique 11.

De cette manière, un tel assemblage de l'élément d'obturation 21 et du carter 17 permet de bloquer en rotation l'élément d'obturation 21 par rapport au carter 17.

Par ailleurs, l'élément d'obturation 21 et le carter 17 sont également assemblés entre eux au moyen d'éléments de fixation 53, en particulier par vissage.

De cette manière, l'assemblage de l'élément d'obturation 21 avec le carter 17 permet de bloquer en translation l'élément d'obturation 21 par rapport au carter 17 et, plus particulièrement, par rapport à la deuxième extrémité 17b du carter 17.

Ici, la fixation de l'élément d'obturation 21 avec le carter 17 est mise en oeuvre au moyen de vis de fixation 53, pouvant être, par exemple, de type auto-taraudeuse. Dans la configuration assemblée de l'actionneur électromécanique 11, les vis de fixation 53 traversent des trous de passage 54 ménagés dans le carter 17 et sont vissées dans des trous de fixation 55 de l'élément d'obturation 21. En outre, les vis de fixation 53 traversent des trous de passage 56 ménagés dans la couronne 28.

En variante, non représentée, les éléments de fixation 53 de l'élément d'obturation 21 avec le carter 17 peuvent être des rivets ou des éléments de fixation par encliquetage élastique.

La couronne 28 comprend des dégagements 57. Les dégagements 57 de la couronne 28 sont configurés pour coopérer avec les crans 41 de l'élément d'obturation 21, lors de l'assemblage de la couronne 28 avec l'élément d'obturation 21.

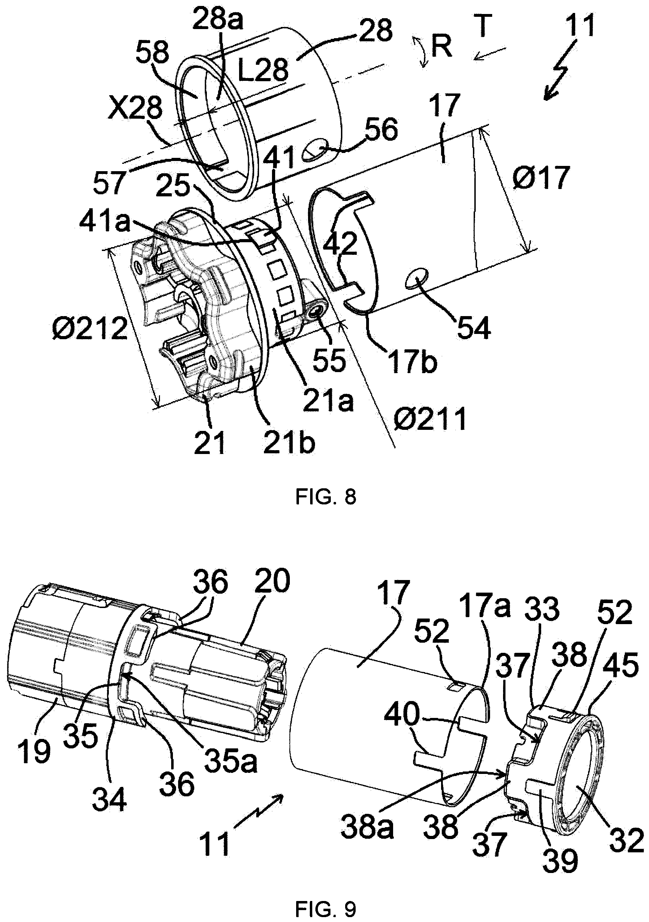

En référence à la figure 8, un seul des dégagements 57 de la couronne 28 est représenté.

La couronne 28 comprend également une butée 58. La butée 58 est configurée pour coopérer avec les crans 41 de l'élément d'obturation 21, suite à l'assemblage de la couronne 28 avec l'élément d'obturation 21 et à un mouvement de rotation de la couronne 28 par rapport à l'élément d'obturation 21, en particulier par rapport à l'axe de rotation X, de sorte à bloquer en translation la couronne 28 par rapport à l'élément d'obturation 21.

Ainsi, l'assemblage de l'actionneur électromécanique 11 est simplifié, tout en minimisant les coûts d'obtention de l'actionneur électromécanique 11 ainsi que les risques de défauts qualité de l'actionneur électromécanique 11, puisque la couronne 28 est de type monobloc et présente des dégagements 57 configurés pour coopérer avec les crans 41 de l'élément d'obturation 21, lors de l'assemblage de la couronne 28 avec l'élément d'obturation 21, et puisque la butée 58 est configurée pour coopérer avec les crans 41 de l'élément d'obturation 21, dans la configuration assemblée de l'actionneur électromécanique 11.

En outre, un tel actionneur électromécanique 11 comprend la couronne 28 monobloc, c'est-à-dire sans ouverture selon son axe longitudinal X28 pour permettre l'assemblage de la couronne 28 par rapport au carter 17 et à l'élément d'obturation 21, de sorte à s'affranchir d'un élément de fermeture d'un premier bord d'une ouverture de la couronne 28 par rapport à un deuxième bord de l'ouverture de la couronne 28, en particulier d'une agrafe.

Par ailleurs, les dégagements 57 de la couronne 28 permettent de garantir l'assemblage de la couronne 28 par rapport aux crans 41 de l'élément d'obturation 21, en particulier dans le cas où l'élément d'obturation 21 est monobloc, c'est-à-dire comprenant les première et deuxième parties 21a, 21b.

Avantageusement, le diamètre intérieur Ø28 de la couronne 28, en dehors de la zone comprenant la butée 58 de la couronne 28, est supérieur au diamètre extérieur Ø211 de la première partie 21a de l'élément d'obturation 21, au niveau des crans 41.

Ainsi, la couronne 28 peut être déplacée suivant un mouvement de translation, en particulier par coulissement, par rapport à la première partie 21a de l'élément d'obturation 21.

Avantageusement, la butée 58 de la couronne 28 est formée par une nervure s'étendant radialement à partir d'une surface interne 28a de la couronne 28 vers l'axe de longitudinal X28 de la couronne 28.

Ici, l'axe longitudinal X28 de la couronne 28 est également l'axe de rotation de la couronne 28, dans la configuration assemblée de l'actionneur électromécanique11.

Avantageusement, la butée 58 de la couronne 28 s'étend axialement, suivant une direction parallèle à l'axe longitudinal X28 de la couronne 28. En outre, la butée 58 de la couronne 28 présente une longueur L28, mesurée selon l'axe longitudinal X28, inférieure à une distance D entre la butée 25 de l'élément d'obturation 21 et un bord 41a des crans 41 de l'élément d'obturation 21, opposé à la butée 25.

Préférentiellement, chaque dégagement 57 de la couronne 28 est formé par un évidement ménagé dans la butée 58 de la couronne 28.

Ici, la couronne 28 comprend deux dégagements 57 diamétralement opposés par rapport à l'axe longitudinal X28 et, plus particulièrement, par rapport à l'axe de rotation X, dans la configuration assemblée de l'actionneur électromécanique 11, puisque l'élément d'obturation 21 comprend deux crans 41.

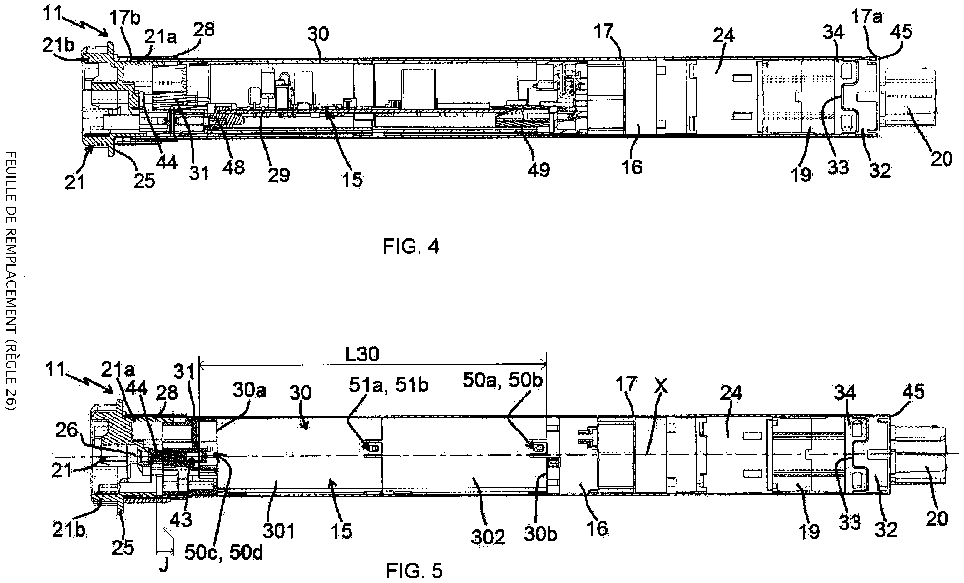

L'actionneur électromécanique 11 comprend également un élément d'interface 31, comme illustré aux figures 4 à 7 et 10 à 11. L'élément d'interface 31 est disposé entre l'élément d'obturation 21 et, plus particulièrement, la première partie 21a de l'élément d'obturation 21, et l'unité électronique de contrôle 15, suivant la direction de l'axe de rotation X.

Ici, l'élément d'interface 31 de l'actionneur électromécanique 11 fait partie intégrante de l'ensemble 27.

Ici, et tel qu'illustré aux figures 4 et 5, l'unité électronique de contrôle 15, le moteur électrique 16, le réducteur 19, l'élément d'interface 31 et le frein 24 sont disposés à l'intérieur du carter 17 de l'actionneur électromécanique 11.

Préférentiellement, les organes 31, 15, 16, 19, 24, 20 de l'ensemble 27 sont assemblés entre eux dans un ordre prédéterminé. L'ordre prédéterminé d'assemblage des organes 31, 15, 16, 19, 24, 20 de l'ensemble 27 comprend en premier lieu l'assemblage de l'élément d'interface 31 avec l'unité électronique de contrôle 15, puis l'assemblage de l'unité électronique de contrôle 15 avec le moteur électrique 16, puis l'assemblage du moteur électrique 16 avec le réducteur 19 et l'assemblage du réducteur 19 avec l'arbre de sortie 20.

Dans l'exemple de réalisation illustré aux figures 3 à 5 et 11, le frein 24 est disposé entre le moteur électrique 16 et le réducteur 19.

En variante, non représentée, le frein 24 est disposé entre le réducteur 19 et l'arbre de sortie 20.

Ici, chaque organe 31, 15, 16, 19, 24, 20 de l'ensemble 27 présente un axe qui est confondu avec l'axe de rotation X, dans la configuration assemblée de l'actionneur électromécanique 11. L'axe de chacun des organes 15, 16, 19, 24, 20 de l'ensemble 27 n'est pas représenté sur les figures 3 à 11, de sorte à simplifier la lecture de celles-ci.

Avantageusement, l'unité électronique de contrôle 15 comprend un boîtier 30 et une carte électronique 29. La carte électronique 29 est disposée à l'intérieur du boîtier 30, dans la configuration assemblée de l'unité électronique de contrôle 15.

Ainsi, le boîtier 30 de l'unité électronique de contrôle 15 permet de protéger la carte électronique 29, lors de l'assemblage de l'actionneur électromécanique 11 et suite à l'assemblage de ce dernier, ainsi que d'assurer la rigidité de l'ensemble 27.

En outre, le boîtier 30 de l'unité électronique de contrôle 15 permet d'isoler électriquement la carte électronique 29 par rapport au carter 17.

Ici et comme illustré aux figures 5 et 11, le boîtier 30 comprend un premier tronçon 301, réalisé sous la forme d'un premier tube creux, et un deuxième tronçon 302, réalisé sous la forme d'un deuxième tube creux.

Les premier et deuxième tronçons 301, 302 sont configurés pour loger la carte électronique 29, dans la configuration assemblée de l'unité électronique de contrôle 15.

En variante, non représentée, le boîtier 30 comprend un unique tronçon.

Le boîtier 30 de l'unité électronique de contrôle 15 est, préférentiellement, de forme cylindrique et, plus particulièrement, de section circulaire.

Préférentiellement, le diamètre extérieur du boîtier 30 de l'unité électronique de contrôle 15 est inférieur au diamètre intérieur du carter 17 de l'actionneur électromécanique 11, de sorte que le boîtier 30 puisse être inséré dans le carter 17 de l'actionneur électromécanique 11, lors de l'assemblage de l'actionneur électromécanique 11.

Ici, le boîtier 30 de l'unité électronique de contrôle 15 comprend une première extrémité 30a configurée pour coopérer avec l'élément d'interface 31 et une deuxième extrémité 30b configurée pour coopérer avec le moteur électrique 16.

En outre, la carte électronique 29 est configurée pour coopérer avec un connecteur électrique 48 de l'élément d'interface 31, dans la configuration assemblée de l'actionneur électromécanique 11. En outre, la carte électronique 29 est configurée pour coopérer avec un connecteur électrique 49 du moteur électrique 16, dans la configuration assemblée de l'actionneur électromécanique 11.

On décrit à présent, en référence aux figures 3 à 11, les différents organes de l'actionneur électromécanique 11 appartenant à l'installation domotique des figures 1 et 2.

Avantageusement, le moteur électrique 16 présente un corps 16c, comme illustré à la figure 11. En outre, le corps 16c du moteur électrique 16 est, préférentiellement, de forme cylindrique et, plus particulièrement, de section circulaire.

Préférentiellement, le diamètre extérieur du corps 16c du moteur électrique 16 est inférieur au diamètre intérieur du carter 17 de l'actionneur électromécanique 11, de sorte que le corps 16c du moteur électrique 16 puisse être inséré dans le carter 17 de l'actionneur électromécanique 11, lors de l'assemblage de l'actionneur électromécanique 11.

Avantageusement, le réducteur 19 présente un corps 19c, comme illustré à la figure 11. En outre, le corps 19c du réducteur 19 est, préférentiellement, de forme cylindrique et, plus particulièrement, de section circulaire.

Préférentiellement, le diamètre extérieur du corps 19c du réducteur 19 est inférieur au diamètre intérieur du carter 17 de l'actionneur électromécanique 11, de sorte que le corps 19c du réducteur 19 puisse être inséré dans le carter 17 de l'actionneur électromécanique 11, lors de l'assemblage de l'actionneur électromécanique 11.

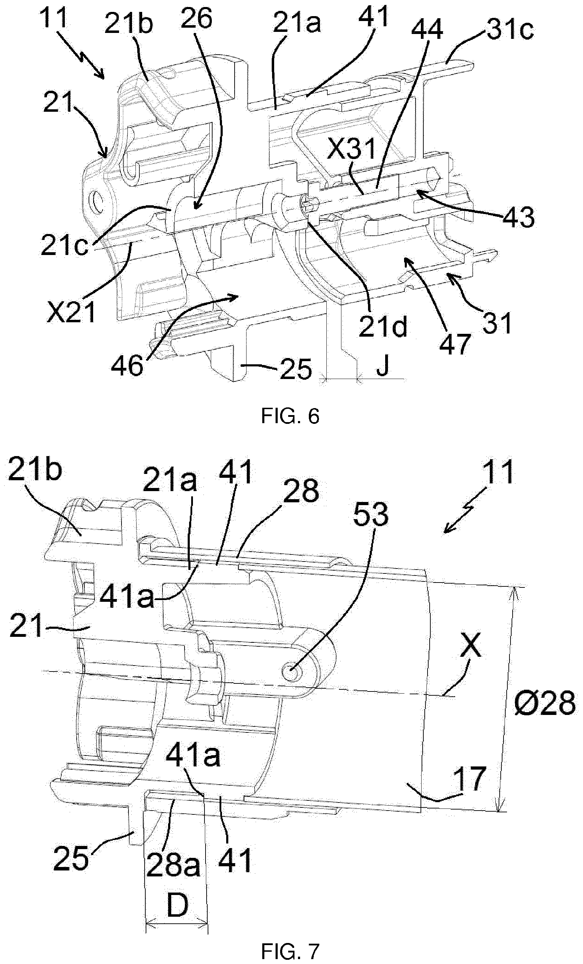

Avantageusement, l'élément d'interface 31 présente un corps 31c, comme illustré aux figures 6 et 11. En outre, le corps 31c de l'élément d'interface 31 est, préférentiellement, de forme cylindrique et, plus particulièrement, de section circulaire.

Préférentiellement, le diamètre extérieur du corps 31c de l'élément d'interface 31 est inférieur au diamètre intérieur du carter 17 de l'actionneur électromécanique 11, de sorte que le corps 31c de l'élément d'interface 31 puisse être inséré dans le carter 17 de l'actionneur électromécanique 11, lors de l'assemblage de l'actionneur électromécanique 11.

Avantageusement, le frein 24 présente un corps 24c, comme illustré à la figure 11. En outre, le corps 24c du frein 24 est, préférentiellement, de forme cylindrique et, plus particulièrement, de section circulaire.

Préférentiellement, le diamètre extérieur du corps 24c du frein 24 est inférieur au diamètre intérieur du carter 17 de l'actionneur électromécanique 11, de sorte que le corps 24c du frein 24 puisse être inséré dans le carter 17 de l'actionneur électromécanique 11, lors de l'assemblage de l'actionneur électromécanique 11.

Avantageusement, le corps 31c de l'élément d'interface 31, les premier et deuxième tronçons 301, 302 du boîtier 30 de l'unité électronique de contrôle 15, le corps 16c du moteur électrique 16, le corps 19c du réducteur 19 et, éventuellement, le corps 24c du frein 24 sont assemblés entre eux au moyen d'éléments de fixation 50a, 50b, 50c, 50d, 51a, 51b, en particulier par encliquetage élastique, de sorte à former l'ensemble 27.

Ainsi, les éléments de fixation 50a, 50b, 50c, 50d, 51a, 51b des différents organes 31, 15, 16, 19, 24 de l'ensemble 27 permettent de solidariser en rotation et en translation ces organes 31, 15, 16, 19, 24 entre eux.

De cette manière, suite à la fixation des organes 31, 15, 16, 19, 24 de l'ensemble 27 l'un par rapport à l'autre, les liaisons entre ces organes 31, 15, 16, 19, 24 de l'ensemble 27 sont sans débattement axial, hormis les tolérances d'assemblage des organes 31, 15, 16, 19, 24 l'un par rapport à l'autre.

En outre, l'assemblage des différents organes 31, 15, 16, 19, 24 de l'ensemble 27 au moyen des éléments de fixation 50a, 50b, 50c, 50d, 51a, 51b permet de pouvoir introduire l'ensemble 27, en une seule opération, dans le carter 17, suivant un mouvement de translation.

Ici, les éléments de fixation 50a, 50b, 50c, 50d, 51a, 51b par encliquetage élastique sont réalisés au moyen de languettes et de pions.

Ici, l'un des organes de l'ensemble 27 est assemblé à un autre des organes de l'ensemble 27 au moyen des éléments de fixation 50a, 50b, 50c, 50d, 51a, 51b par encliquetage élastique, pouvant être au nombre de quatre et décalés angulairement d'un angle de 90° autour de l'axe de rotation X.

Le nombre et la position angulaire des éléments de fixation par encliquetage élastique entre deux des organes de l'ensemble ne sont pas limitatifs et peuvent être différents, en particulier, ces éléments de fixation peuvent être au nombre de trois et décalés angulairement d'un angle de 120° autour de l'axe de rotation.

Préférentiellement, le diamètre extérieur, respectivement, du corps 31c de l'élément d'interface 31, du boîtier 30 de l'unité électronique de contrôle 15, du corps 16c du moteur électrique 16, du corps 19c du réducteur 19 et du corps 24c du frein 24 présente une même valeur.

Avantageusement, l'actionneur électromécanique 11 comprend également un élément de maintien 32. L'élément de maintien 32 est assemblé au niveau de la première extrémité 17a du carter 17. L'élément de maintien 32 comprend une première butée 33 configurée pour coopérer avec l'ensemble 27 et, plus particulièrement, avec le réducteur 19, dans la configuration assemblée de l'actionneur électromécanique 11.

Dans l'exemple de réalisation illustré aux figures 4, 5, 9 et 11, l'ensemble 27 et, plus particulièrement, le réducteur 19 comprend un embout 34 configuré pour coopérer avec l'élément de maintien 32, au niveau de la première extrémité 17a du carter 17, dans la configuration assemblée de l'actionneur électromécanique 11. Sur la figure 9, seule une partie du carter 17 est représentée, à proximité de son extrémité 17a.

Ici, l'embout 34 comprend des encoches 35 et des languettes 36, disposées alternativement autour de l'axe de rotation X, configurées pour coopérer, respectivement, avec des languettes 38 et des encoches 37 de l'élément de maintien 32.

Ainsi, les languettes 38 de l'élément de maintien 32 sont configurées pour s'engager dans les encoches 35 de l'embout 34, dans la configuration assemblée de l'actionneur électromécanique 11. En outre, les languettes 36 de l'embout 34 sont configurées pour s'engager dans les encoches 37 de l'élément de maintien 32, dans la configuration assemblée de l'actionneur électromécanique 11.

Dans un tel cas, la première butée 33 de l'élément de maintien 32 configurée pour coopérer avec l'ensemble 27 et, plus particulièrement, avec le réducteur 19, dans la configuration assemblée de l'actionneur électromécanique 11, est réalisée par une paroi d'extrémité 38a de chacune des languettes 38, ces parois d'extrémité 38 venant en appui contre des parois de fond 35a de chacune des encoches 35 de l'embout 34.

Ici, l'embout 34 comprend quatre encoches 35 décalées angulairement d'un angle de 90°, autour de l'axe de rotation X, et quatre languettes 36 décalées angulairement d'un angle de 90°, autour de l'axe de rotation X. En outre, l'élément de maintien 32 comprend quatre encoches 37 décalées angulairement d'un angle de 90°, autour de l'axe de rotation X, et quatre languettes 38 décalées angulairement d'un angle de 90°, autour de l'axe de rotation X.

Le nombre et la position angulaire des encoches et des languettes de l'embout et de l'élément de maintien ne sont pas limitatifs et peuvent être différents, en particulier, ces encoches et languettes peuvent être au nombre de trois et décalées angulairement d'un angle de 120° autour de l'axe de rotation.

En outre, l'élément de maintien 32 comprend des crans 39, chacun en forme de saillie radiale, configurés pour coopérer avec des deuxièmes échancrures 40 du carter 17. Les deuxièmes échancrures 40 sont ménagées au niveau de la première extrémité 17a du carter 17.

Ici, l'élément de maintien 32 comprend deux crans 39 diamétralement opposés par rapport à l'axe de rotation X. En outre, le carter 17 comprend deux deuxièmes échancrures 40 diamétralement opposées par rapport à l'axe de rotation X.

De cette manière, un tel assemblage de l'embout 34, de l'élément de maintien 32 et du carter 17 permet de bloquer en rotation l'ensemble 27 par rapport au carter 17 et, plus particulièrement, le réducteur 19 par rapport au carter 17.

Avantageusement, l'élément de maintien 32 comprend une deuxième butée 45 configurée pour coopérer avec le carter 17, au niveau de la première extrémité 17a du carter 17, dans la configuration assemblée de l'actionneur électromécanique 11.

Ainsi, la deuxième butée 45 de l'élément de maintien 32 permet de limiter l'enfoncement de l'élément de maintien 32 dans le carter 17.

Ici, la deuxième butée 45 de l'élément de maintien 32 est réalisée sous la forme d'une collerette, en particulier de forme cylindrique et plane, perpendiculaire à l'axe de rotation X, dans la configuration assemblée de l'actionneur électromécanique 11.

Par ailleurs, l'élément de maintien 32 et le carter 17 sont également assemblés entre eux au moyen d'éléments de fixation 52, en particulier par encliquetage élastique.

Ainsi, l'assemblage de l'élément de maintien 32 avec le carter 17 permet de bloquer en translation l'élément de maintien 32 et, plus particulièrement, l'ensemble 27 par rapport au carter 17 et, plus particulièrement, par rapport à la première extrémité 17a du carter 17.

De cette manière, suite à la fixation de l'élément de maintien 32 par rapport au carter 17, l'élément de maintien 32 sert de butée pour l'ensemble 27, lors du coulissement de l'ensemble 27 à l'intérieur du carter 17, suivant la direction axiale de l'actionneur électromécanique 11, à partir de la deuxième extrémité 17b du carter 17 vers la première extrémité 17a du carter 17.

Un tel assemblage de l'actionneur électromécanique 11 permet de prévoir un jeu J, en particulier axial, entre l'élément d'obturation 21 et l'élément d'interface 31, suivant la direction axiale de l'actionneur électromécanique 11, comme illustré aux figures 5 et 6.

Le jeu J permet de garantir l'assemblage de l'élément d'obturation 21 par rapport au carter 17.

Ici et de manière nullement limitative, le jeu J entre l'élément d'obturation 21 et l'élément d'interface 31, suivant la direction axiale de l'actionneur électromécanique 11, peut être de l'ordre de plus ou moins deux millimètres.

Avantageusement, l'élément d'interface 31 comprend un premier logement 43 à l'intérieur duquel est disposé un élément d'inhibition 44 du jeu J entre l'élément d'obturation 21 et l'élément d'interface 31, suivant la direction axiale de l'actionneur électromécanique 11.

Ainsi, l'élément d'inhibition 44 du jeu J entre l'élément d'obturation 21 et l'élément d'interface 31, suivant la direction axiale de l'actionneur électromécanique 11, permet d'améliorer la tenue des organes 31, 15, 16, 19, 24, 20 de l'actionneur électromécanique 11 disposés à l'intérieur du carter 17 et de s'affranchir du risque de déconnexion électrique de l'unité électronique de contrôle 15 par rapport au câble d'alimentation électrique 18 et par rapport au moteur électrique 16, notamment lors d'un choc de l'actionneur électromécanique 11, pouvant intervenir lors d'une manipulation ou du transport de l'actionneur électromécanique 11, ou lors d'un fonctionnement anormal de l'actionneur électromécanique 11.

De cette manière, une telle construction de l'actionneur électromécanique 11 permet d'inhiber le jeu J entre l'élément d'obturation 21 et l'élément d'interface 31, suivant la direction axiale de l'actionneur électromécanique 11, suite à l'assemblage de l'actionneur électromécanique 11, de sorte à garantir un état fonctionnel de l'actionneur électromécanique 11, au cours des différentes phases de vie de l'actionneur électromécanique 11.

En outre, l'élément d'inhibition 44 permet de bloquer en translation l'élément d'interface 31 par rapport à l'élément d'obturation 21.

Ici, le premier logement 43 de l'élément d'interface 31 est de forme générale cylindrique, centré sur un axe longitudinal X31 de l'élément d'interface 31.

Par ailleurs, l'axe longitudinal X31 de l'élément d'interface 31 est confondu avec l'axe de rotation X du moteur électrique 16 de l'actionneur électromécanique 11, ou encore l'axe de rotation du tube d'enroulement 4, en configuration montée du dispositif d'entraînement motorisé 5.

Préférentiellement, l'élément d'obturation 21 comprend un premier logement 26 débouchant au niveau d'une première face 21c de l'élément d'obturation 21 et au niveau d'une deuxième face 21d de l'élément d'obturation 21.

Le premier logement 26 de l'élément d'obturation 21 est disposé en vis-à-vis de l'élément d'inhibition 44, dans la configuration assemblée de l'actionneur électromécanique 11, de sorte à permettre un ajustement en position de l'élément d'inhibition 44 à partir de l'extérieur de l'élément d'obturation 21.

Ainsi, le réglage en position de l'élément d'inhibition 44 par rapport à l'élément d'interface 31 et à l'élément d'obturation 21, suivant la direction axiale de l'actionneur électromécanique 11, peut être mis en œuvre à partir de l'extérieur de l'élément d'obturation 21 et, plus particulièrement, de l'actionneur électromécanique 11, en manœuvrant l'élément d'inhibition 44 au moyen d'un outil, non représenté, tel qu'un tournevis, qui traverse le premier logement 26 de l'élément d'obturation 21, comme expliqué ci-après.

De cette manière, le positionnement de l'élément d'inhibition 44 par rapport à l'élément d'interface 31 et à l'élément d'obturation 21, suivant la direction axiale de l'actionneur électromécanique 11, peut être mis en œuvre en fonction de la valeur du jeu J, sans avoir à démonter un ou plusieurs éléments de l'actionneur électromécanique 11.

Ici, le premier logement 26 de l'élément d'obturation 21 est de forme générale cylindrique, centré sur un axe longitudinal X21 de l'élément d'obturation 21.

Par ailleurs, l'axe longitudinal X21 de l'élément d'obturation 21 est confondu avec l'axe de rotation X du moteur électrique 16 de l'actionneur électromécanique 11, ou encore l'axe de rotation du tube d'enroulement 4, en configuration montée du dispositif d'entraînement motorisé 5. En outre, l'axe longitudinal X21 de l'élément d'obturation 21 est confondu avec l'axe longitudinal X31 de l'élément d'interface 31, dans la configuration assemblée de l'actionneur électromécanique 11.

Avantageusement, l'élément d'inhibition 44 est configuré pour coopérer avec une face de l'élément d'obturation 21 et, plus particulièrement, la deuxième face 21d de l'élément d'obturation 21, suite à un ajustement en position de l'élément d'inhibition 44 par rapport à l'élément d'obturation 21, suivant la direction axiale de l'actionneur électromécanique 11, de sorte à inhiber le jeu J entre l'élément d'obturation 21 et l'élément d'interface 31.

Ainsi, l'inhibition du jeu J entre l'élément d'obturation 21 et l'élément d'interface 31 est mis en œuvre par le réglage en position de l'élément d'inhibition 44 par rapport à l'élément d'interface 31 et à l'élément d'obturation 21, suivant la direction axiale de l'actionneur électromécanique 11 et, plus particulièrement, la mise en appui de l'élément d'inhibition 44 contre la deuxième face 21d de l'élément d'obturation 21.

Préférentiellement, l'élément d'inhibition 44 est une vis. En outre, le premier logement 43 de l'élément d'interface 31 est un alésage.

Ici, l'élément d'inhibition 44 est une vis présentant un filetage métrique. En outre, le premier logement 43 de l'élément d'interface 31 est un alésage taraudé.

En variante, non représentée, l'élément d'inhibition 44 est une vis auto-taraudeuse. Dans ce cas, le premier logement 43 de l'élément d'interface 31 est un alésage lisse.

Dans un exemple de réalisation, la vis formant l'élément d'inhibition 44 est une vis identique aux vis formant les éléments de fixation 53 de l'élément d'obturation 21 avec le carter 17.

Ainsi, le nombre de modèles de vis pour la fabrication de l'actionneur électromécanique 11 est limité, de sorte à simplifier l'industrialisation et à éviter des risques d'erreur de référence.

En pratique, une tête de la vis formant l'élément d'inhibition 44 est configurée pour coopérer avec la deuxième face 21d de l'élément d'obturation 21, suite à un dévissage de la vis 44 par rapport à l'alésage 43 de l'élément d'interface 31, de sorte à inhiber le jeu J entre l'élément d'obturation 21 et l'élément d'interface 31.

Avantageusement, le premier logement 26 ménagé dans l'élément d'obturation 21 permet le passage d'un outil, en particulier d'un tournevis, de sorte à atteindre l'élément d'inhibition 44 et, plus particulièrement, permettre le dévissage de la vis formant l'élément d'inhibition 44.

Préférentiellement, l'élément d'inhibition 44 est assemblé sur l'élément d'interface 31 avant l'introduction de l'ensemble 27 à l'intérieur du carter 17.

Ainsi, l'opération d'assemblage de l'élément d'inhibition 44 sur l'élément d'interface 31 n'engendre pas un allongement du temps d'assemblage de l'ensemble 27 à l'intérieur du carter 17, puisque cette opération peut être mise en œuvre en temps masqué, au cours de la fabrication de l'actionneur électromécanique 11.

Ici, la vis 44 est vissée à l'intérieur du premier logement 43 de l'élément d'interface 31 avant l'introduction de l'ensemble 27 à l'intérieur du carter 17, en particulier jusqu'à la mise en appui de la tête de la vis 44 contre le rebord du premier logement 43 de l'élément d'interface 31.

Avantageusement, l'élément d'obturation 21 comprend un deuxième logement 46. Le deuxième logement 46 de l'élément d'obturation 21 est configuré pour permettre le passage du câble d'alimentation électrique 18.

En outre, l'élément d'interface 31 comprend un deuxième logement 47. Le deuxième logement 47 de l'élément d'interface 31 comprend en partie le premier connecteur électrique 48. Le premier connecteur électrique 48 ménagé dans le deuxième logement 47 de l'élément d'interface 31 est configuré pour coopérer avec un connecteur électrique du câble d'alimentation électrique 18.

Par ailleurs, le premier connecteur électrique 48 de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Ainsi, le connecteur électrique du câble d'alimentation électrique 18 est configuré pour coopérer avec le premier connecteur électrique 48 de l'élément d'interface 31, de sorte à alimenter en énergie électrique le moteur électrique 16, au moyen du câble d'alimentation électrique 18.

Dans un exemple de réalisation, non représenté, le deuxième logement 46 de l'élément d'obturation 21 est également configuré pour permettre le passage d'un câble d'échange de données.

Dans ce cas, l'élément d'interface 31 comprend un troisième logement. Le troisième logement de l'élément d'interface 31 comprend un deuxième connecteur électrique. Le deuxième connecteur électrique ménagé dans le troisième logement de l'élément d'interface 31 est configuré pour coopérer avec un connecteur électrique du câble d'échange de données.

Par ailleurs, toujours dans ce cas, le deuxième connecteur électrique de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Dans un tel cas où l'actionneur électromécanique 11 est relié au câble d'échange de données, celui-ci permet à l'unité électronique de contrôle 15 de recevoir et/ou d'émettre des données avec une unité de commande, en particulier avec l'unité de commande locale 12 et/ou l'unité de commande centrale 13, par une liaison filaire.

Ainsi, le connecteur électrique du câble d'échange de données est configuré pour coopérer avec le deuxième connecteur électrique de l'élément d'interface 31, de sorte à échanger des données entre au moins l'une des unités de commande 12, 13 et l'unité électronique de contrôle 15.

On décrit à présent un procédé d'assemblage de l'actionneur électromécanique tubulaire 11 conforme à un mode de réalisation de l'invention.

Le procédé d'assemblage comprend une étape d'assemblage de la couronne 28 par rapport à l'élément d'obturation 21 et une étape d'assemblage du carter 17 par rapport à l'élément d'obturation 21 et à la couronne 28.

Lors de l'étape d'assemblage de la couronne 28 par rapport à l'élément d'obturation 21, le procédé comprend une étape de positionnement des dégagements 57 de la couronne 28 par rapport aux crans 41 de l'élément d'obturation 21, une première étape de déplacement de la couronne 28 par rapport à l'élément d'obturation 21 par un mouvement de translation T des dégagements 57 de la couronne 28 par rapport aux crans 41 de l'élément d'obturation 21, puis une deuxième étape de déplacement de la couronne 28 par rapport à l'élément d'obturation 21 par un mouvement de rotation R, de sorte à bloquer en translation la couronne 28 par rapport à l'élément d'obturation 21 par la mise en appui de la butée 58 de la couronne 28 contre les crans 41 de l'élément d'obturation 21.

Suite à l'étape de positionnement, les dégagements 57 de la couronne 28 sont alignés, selon des directions parallèles à l'axe longitudinal X28, avec les crans 41 de l'élément d'obturation 21.

En outre, lors de l'étape d'assemblage du carter 17 par rapport à l'élément d'obturation 21 et à la couronne 28, le procédé comprend une étape d'insertion du carter 17 entre l'élément d'obturation 21 et la couronne 28, puis une étape d'introduction des crans 41 de l'élément d'obturation 21 à l'intérieur des premières échancrures 42 ménagées au niveau de la deuxième extrémité 17b du carter 17.

Grâce à la présente invention, l'assemblage de l'actionneur électromécanique est simplifié, tout en minimisant les coûts d'obtention de l'actionneur électromécanique ainsi que les risques de défauts qualité de l'actionneur électromécanique, puisque la couronne est de type monobloc et présente des dégagements configurés pour coopérer avec les crans de l'élément d'obturation, lors de l'assemblage de la couronne avec l'élément d'obturation et puisque la butée est configurée pour coopérer avec les crans de l'élément d'obturation, dans une configuration assemblée de l'actionneur électromécanique.

En outre, un tel actionneur électromécanique comprend une couronne monobloc, c'est-à-dire sans ouverture selon son axe longitudinal pour permettre l'assemblage de celle-ci par rapport au carter et à l'élément d'obturation, de sorte à s'affranchir d'un élément de fermeture d'un premier bord d'une ouverture de la couronne par rapport à un deuxième bord de l'ouverture de la couronne, en particulier d'une agrafe.

De nombreuses modifications peuvent être apportées aux exemples de réalisation décrits précédemment sans sortir du cadre de l'invention.

En variante, non représentée, le boîtier 30 de l'unité électronique de contrôle 15 comprend un nombre de tronçons, réalisés sous la forme d'un tube creux, supérieur ou égal à trois.

En variante, non représentée, l'unité électronique de contrôle 15 est disposée à l'extérieur du carter 17 de l'actionneur électromécanique 11 et, en particulier, montée sur le support 23 ou dans l'élément d'obturation 21.

En outre, les modes de réalisation et variantes envisagés peuvent être combinés pour générer de nouveaux modes de réalisation de l'invention, sans sortir du cadre de l'invention comme défini par les revendications suivantes.

## Revendications

1. Actionneur électromécanique tubulaire (11) pour une installation domotique de fermeture ou de protection solaire, l'actionneur électromécanique (11) comprenant au moins :
- un moteur électrique (16),
- un carter (17), le carter (17) étant creux et configuré pour loger au moins le moteur électrique (16), le carter (17) comprenant une première extrémité (17a) et une deuxième extrémité (17b), la deuxième extrémité (17b) étant opposée à la première extrémité (17a),
- un élément d'obturation (21), l'élément d'obturation (21) étant configuré pour obturer la deuxième extrémité (17b) du carter (17), l'élément d'obturation (21) comprenant des crans (41) configurés pour coopérer avec des échancrures (42) du carter (17), les échancrures (42) étant ménagées au niveau de la deuxième extrémité (17b) du carter (17), et
- une couronne (28), la couronne (28) étant disposée au moins autour du carter (17) et au niveau de la deuxième extrémité (17b) du carter (17), la couronne (28) étant une pièce monobloc,
**caractérisé en ce que** la couronne (28) comprend :
∘ des dégagements (57), les dégagements (57) de la couronne (28) étant configurés pour coopérer avec les crans (41) de l'élément d'obturation (21), lors de l'assemblage de la couronne (28) avec l'élément d'obturation (21), et
∘ une butée (58), la butée (58) étant configurée pour coopérer avec les crans (41) de l'élément d'obturation (21), suite à l'assemblage de la couronne (28) avec l'élément d'obturation (21) et à un mouvement de rotation (R) de la couronne (28) par rapport à l'élément d'obturation (21), de sorte à bloquer en translation la couronne (28) par rapport à l'élément d'obturation (21).

2. Actionneur électromécanique tubulaire (11) pour une installation domotique de fermeture ou de protection solaire selon la revendication 1, **caractérisé en ce que** l'élément d'obturation (21) est une pièce monobloc et **en ce que** l'élément d'obturation (21) comprend une première partie (21a) configurée pour coopérer avec le carter (17) et une deuxième partie (21b) configurée pour coopérer avec un support (23).

3. Actionneur électromécanique tubulaire (11) pour une installation domotique de fermeture ou de protection solaire selon la revendication 1 ou la revendication 2, **caractérisé en ce que** la butée (58) de la couronne (28) est formée par une nervure s'étendant radialement à partir d'une surface interne (28a) de la couronne (28) vers un axe longitudinal (X28) de la couronne (28).

4. Actionneur électromécanique tubulaire (11) pour une installation domotique de fermeture ou de protection solaire selon la revendication 3, **caractérisé en ce que** la butée (58) de la couronne (28) s'étend axialement, suivant une direction parallèle à l'axe longitudinal (X28) de la couronne (28), et **en ce que** la butée (58) de la couronne (28) présente une longueur (L28) inférieure à une distance (D) entre une butée (25) de l'élément d'obturation (21) et un bord (41a) des crans (41) de l'élément d'obturation (21), opposé à cette butée (25).

5. Actionneur électromécanique tubulaire (11) pour une installation domotique de fermeture ou de protection solaire selon la revendication 4, **caractérisé en ce que** la butée (25) de l'élément d'obturation (21) est configurée pour coopérer avec le carter (17), au niveau de la deuxième extrémité (17b) du carter (17), dans la configuration assemblée de l'actionneur électromécanique (11), par l'intermédiaire de la couronne (28).

6. Actionneur électromécanique tubulaire (11) pour une installation domotique de fermeture ou de protection solaire selon l'une quelconque des revendications 3 à 5, **caractérisé en ce que** chaque dégagement (57) de la couronne (28) est formé par un évidement ménagé dans la butée (58) de la couronne (28).

7. Actionneur électromécanique tubulaire (11) pour une installation domotique de fermeture ou de protection solaire selon l'une quelconque des revendications 1 à 6, **caractérisé en ce que** l'élément d'obturation (21) et le carter (17) sont assemblés entre eux au moyen d'éléments de fixation (53).

8. Actionneur électromécanique tubulaire (11) pour une installation domotique de fermeture ou de protection solaire selon la revendication 7, **caractérisé en ce que** les éléments de fixation (53) sont des vis de fixation, **en ce que**, dans une configuration assemblée de l'actionneur électromécanique (11), les éléments de fixation (53) traversent des trous de passage (54) ménagés dans le carter (17) et sont vissés dans des trous de fixation (55) de l'élément d'obturation (21) et **en ce que** les éléments de fixation (53) traversent des trous de passage (56) ménagés dans la couronne (28).

9. Installation domotique de fermeture ou de protection solaire comprenant un écran (2) enroulable sur un tube d'enroulement (4) entraîné en rotation par un actionneur électromécanique tubulaire (11), **caractérisée en ce que** l'actionneur électromécanique tubulaire (11) est conforme à l'une quelconque des revendications 1 à 8.

10. Procédé d'assemblage d'un actionneur électromécanique tubulaire (11) pour une installation domotique de fermeture ou de protection solaire,
l'actionneur électromécanique (11) comprenant au moins :
- un moteur électrique (16),
- un carter (17), le carter (17) étant creux et configuré pour loger au moins le moteur électrique (16), le carter (17) comprenant une première extrémité (17a) et une deuxième extrémité (17b), la deuxième extrémité (17b) étant opposée à la première extrémité (17a),
- un élément d'obturation (21), l'élément d'obturation (21) étant configuré pour obturer la deuxième extrémité (17b) du carter (17), l'élément d'obturation (21) comprenant des crans (41) configurés pour coopérer avec des échancrures (42) du carter (17), les échancrures (42) étant ménagées au niveau de la deuxième extrémité (17b) du carter (17), et
- une couronne (28), la couronne (28) étant disposée au moins autour du carter (17) et au niveau de la deuxième extrémité (17b) du carter (17), la couronne (28) étant une pièce monobloc,
le procédé comprenant au moins les étapes suivantes :
- assemblage de la couronne (28) par rapport à l'élément d'obturation (21), et
- assemblage du carter (17) par rapport à l'élément d'obturation (21) et à la couronne (28),
**caractérisé en ce que** le procédé comprend également au moins :
lors de l'étape d'assemblage de la couronne (28) par rapport à l'élément d'obturation (21), une étape de positionnement de dégagements (57) de la couronne (28) par rapport aux crans (41) de l'élément d'obturation (21),
une première étape de déplacement de la couronne (28) par rapport à l'élément d'obturation (21) par un mouvement de translation (T) des dégagements (57) de la couronne (28) par rapport aux crans (41) de l'élément d'obturation (21), puis une deuxième étape de déplacement de la couronne (28) par rapport à l'élément d'obturation (21) par un mouvement de rotation (R), de sorte à bloquer en translation la couronne (28) par rapport à l'élément d'obturation (21) par la mise en appui d'une butée (58) de la couronne (28) contre les crans (41) de l'élément d'obturation (21), et
- lors de l'étape d'assemblage du carter (17) par rapport à l'élément d'obturation (21) et à la couronne (28), une étape d'insertion du carter (17) entre l'élément d'obturation (21) et la couronne (28), puis une étape d'introduction des crans (41) de l'élément d'obturation (21) à l'intérieur des échancrures (42) ménagées au niveau de la deuxième extrémité (17b) du carter (17).

## Patentansprüche

1. Rohrförmige elektromechanische Stellvorrichtung (11) für eine gebäudetechnische Verschluss- oder Sonnenschutzanlage, wobei die elektromechanische Stellvorrichtung (11) mindestens umfasst:
- einen Elektromotor (16),
- ein Gehäuse (17), wobei das Gehäuse (17) hohl ist und ausgebildet ist, zumindest den Elektromotor (16) aufzunehmen, und das Gehäuse (17) ein erstes Ende (17a) und ein zweites Ende (17b) umfasst, wobei das zweite Ende (17b) zu dem ersten Ende (17a) entgegengesetzt liegt,
- ein Verschlusselement (21), wobei das Verschlusselement (21) ausgebildet ist, das zweite Ende (17b) des Gehäuses (17) zu verschließen, und das Verschlusselement (21) Stufenelemente (41) umfasst, die ausgebildet sind, mit Einschnitten (42) des Gehäuses (17) zusammenzuwirken, wobei die Einschnitte (42) am zweiten Ende (17b) des Gehäuses (17) vorgesehen sind, und einen Ring (28), wobei der Ring (28) zumindest um das Gehäuse (17) und am zweiten Ende (17b) des Gehäuses (17) angeordnet ist und der Ring (28) ein einstückiges Teil ist,
**dadurch gekennzeichnet, dass** der Ring (28) umfasst:
o Ausschnitte (57), wobei die Ausschnitte (57) des Rings (28) ausgebildet sind, beim Zusammenfügen des Rings (28) und des Verschlusselementes (21) mit den Stufenelementen (41) des Verschlusselements (21) zusammenwirken, und
o einen Anschlag (58), wobei der Anschlag (58) ausgebildet ist, folgend auf das Zusammenfügen des Rings (28) und des Verschlusselements (21) und auf eine Drehbewegung (R) des Rings (28) in Bezug auf das Verschlusselement (21) mit den Stufenelementen (41) des Verschlusselements (21) zusammenzuwirken, um den Ring (28) in seiner Längsbewegung in Bezug auf das Verschlusselement (21) zu blockieren.

2. Rohrförmige elektromechanische Stellvorrichtung (11) für eine gebäudetechnische Verschluss- oder Sonnenschutzanlage nach Anspruch 1, **dadurch gekennzeichnet, dass** das Verschlusselement (21) ein einstückiges Teil ist und dass das Verschlusselement (21) einen ersten Teilbereich (21a), der ausgebildet ist, mit dem Gehäuse (17) zusammenzuwirken, und einen zweiten Teilbereich (21b) umfasst, der ausgebildet ist, mit einem Träger (23) zusammenzuwirken.

3. Rohrförmige elektromechanische Stellvorrichtung (11) für eine gebäudetechnische Verschluss- oder Sonnenschutzanlage nach Anspruch 1 oder Anspruch 2, **dadurch gekennzeichnet, dass** der Anschlag (58) des Ringes (28) durch einen Steg gebildet wird, der sich von einer Innenfläche (28a) des Ringes (28) radial zu einer Längsachse (X28) des Ringes (28) erstreckt.

4. Rohrförmige elektromechanische Stellvorrichtung (11) für eine gebäudetechnische Verschluss- oder Sonnenschutzanlage nach Anspruch 3, **dadurch gekennzeichnet, dass** sich der Anschlag (58) des Ringes (28) axial in einer Richtung parallel zur Längsachse (X28) des Ringes (28) erstreckt und dass der Anschlag (58) des Ringes (28) eine Länge (L28) aufweist, die kleiner ist als ein Abstand (D) zwischen einem Anschlag (25) des Verschlusselements (21) und einer diesem Anschlag (25) gegenüberliegenden Kante (41a) der Stufenelemente (41) des Verschlusselements (21).

5. Rohrförmige elektromechanische Stellvorrichtung (11) für eine gebäudetechnische Verschluss- oder Sonnenschutzanlage nach Anspruch 4, **dadurch gekennzeichnet, dass** der Anschlag (25) des Verschlusselementes (21) ausgebildet ist, in der zusammengebauten Konfiguration der elektromechanischen Stellvorrichtung (11) mit dem Gehäuse (17) am zweiten Ende (17b) des Gehäuses (17) über den Ring (28) zusammenzuwirken.

6. Rohrförmige elektromechanische Stellvorrichtung (11) für eine gebäudetechnische Verschluss- oder Sonnenschutzanlage nach einem beliebigen der Ansprüche 3 bis 5, **dadurch gekennzeichnet, dass** jeder Ausschnitt (57) des Ringes (28) durch eine im Anschlag (58) des Ringes (28) vorgesehene Ausnehmung gebildet ist.

7. Rohrförmige elektromechanische Stellvorrichtung (11) für eine gebäudetechnische Verschluss- oder Sonnenschutzanlage nach einem beliebigen der Ansprüche 1 bis 6, **dadurch gekennzeichnet, dass** das Verschlusselement (21) und das Gehäuse (17) mittels Befestigungselementen (53) miteinander zusammengefügt sind.

8. Rohrförmige elektromechanische Stellvorrichtung (11) für eine gebäudetechnische Verschluss- oder Sonnenschutzanlage nach Anspruch 7, **dadurch gekennzeichnet, dass** die Befestigungselemente (53) Befestigungsschrauben sind, dass die Befestigungselemente (53) in einer zusammengefügten Konfiguration der elektromechanischen Stellvorrichtung (11) durch Durchgangslöcher (54) im Gehäuse (17) hindurchgeführt und in Befestigungslöcher (55) im Verschlusselement (21) eingeschraubt sind und dass die Befestigungselemente (53) durch Durchgangslöcher (56) in dem Ring (28) hindurchgehen.

9. Gebäudetechnische Verschluss- oder Sonnenschutzanlage mit einem Schirm (2), der auf ein Wickelrohr (4) aufrollbar ist, das von einer rohrförmigen elektromechanischen Stellvorrichtung (11) in Drehung versetzt wird, **dadurch gekennzeichnet, dass** die rohrförmige elektromechanische Stellvorrichtung (11) nach einem beliebigen der Ansprüche 1 bis 8 ausgeführt ist.

10. Verfahren zum Zusammensetzen einer rohrförmigen elektromechanischen Stellvorrichtung (11) für eine gebäudetechnische Verschluss- oder Sonnenschutzanlage,
wobei die elektromechanische Stellvorrichtung (11) mindestens umfasst:
- einen Elektromotor (16),
- ein Gehäuse (17), wobei das Gehäuse (17) hohl ist und ausgebildet ist, zumindest den Elektromotor (16) aufzunehmen, und das Gehäuse (17) ein erstes Ende (17a) und ein zweites Ende (17b) umfasst, wobei das zweite Ende (17b) zu dem ersten Ende (17a) entgegengesetzt liegt,
- ein Verschlusselement (21), wobei das Verschlusselement (21) ausgebildet ist, das zweite Ende (17b) des Gehäuses (17) zu verschließen und das Verschlusselement (21) Stufenelemente (41) umfasst, die ausgebildet sind, mit Einschnitten (42) des Gehäuses (17) zusammenzuwirken, wobei die Einschnitte (42) am zweiten Ende (17b) des Gehäuses (17) vorgesehen sind, und einen Ring (28), wobei der Ring (28) zumindest um das Gehäuse (17) und am zweiten Ende (17b) des Gehäuses (17) angeordnet ist, wobei der Ring (28) ein einstückiges Teil ist,
wobei das Verfahren mindestens die folgenden Schritte umfasst:
- Zusammenfügen des Ringes (28) in Bezug auf das Verschlusselement (21), und
- Zusammenfügen des Gehäuses (17) in Bezug auf das Verschlusselement (21) und den Ring (28),
**dadurch gekennzeichnet, dass** das Verfahren auch mindestens umfasst:
- bei dem Schritt des Zusammenfügens des Ringes (28) in Bezug auf das Verschlusselement (21) einen Schritt des Positionierens von Ausschnitten (57) des Ringes (28) in Bezug auf die Stufenelemente (41) des Verschlusselements (21) einen ersten Schritt des Verschiebens des Ringes (28) in Bezug auf das Verschlusselement (21) durch eine Längsbewegung (T) der Ausschnitte (57) des Ringes (28) in Bezug auf die Stufenelemente (41) des Verschlusselements (21), dann einen zweiten Schritt des Verschiebens des Ringes (28) in Bezug auf das Verschlusselement (21) durch eine Drehbewegung (R), um hinsichtlich der Längsbewegung den Ring (28) in Bezug auf das Verschlusselement (21) zu blockieren, indem ein Anschlag (58) des Ringes (28) in Kontakt mit den Stufenelementen (41) des Verschlusselements (21) gebracht wird, und
- bei dem Schritt des Zusammenfügens des Gehäuses (17) in Bezug auf das Verschlusselement (21) und des Ringes (28) einen Schritt des Einsetzens des Gehäuses (17) zwischen das Verschlusselement (21) und den Ring (28) und dann einen Schritt des Einführens der Stufenelemente (41) des Verschlusselements (21) in die am zweiten Ende (17b) des Gehäuses (17) vorgesehenen Einschnitte (42).

## Claims

1. A tubular electromechanical actuator (11) for a closure or sun protection home automation installation, the electromechanical actuator (11) comprising at least:
- an electric motor (16),
- a casing (17), the casing (17) being hollow and configured to house at least the electric motor (16), the casing (17) comprising a first end (17a) and a second end (17b), the second end (17b) being opposite the first end (17a),
- a closure element (21), the closure element (21) being configured to close off the second end (17b) of the casing (17), the closure element (21) comprising indentations (41) configured to cooperate with recesses (42) of the casing (17), the recesses (42) being arranged at the second end (17b) of the casing (17), and
- a crown (28), the crown (28) being positioned at least around the casing (17) and at the second end (17b) of the casing (17), the crown (28) being a monobloc part,
**characterized in that** the crown (28) comprises:
∘ clearances (57), the clearances (57) of the crown (28) being configured to cooperate with the indentations (41) of the closure element (21), during the assembly of the crown (28) with the closure element (21), and
∘ a stop (58), the stop (58) being configured to cooperate with the indentations (41) of the closure element (21), following the assembly of the crown (28) with the closure element (21) and a rotational movement (R) of the crown (28) relative to the closure element (21), so as to block the translation of the crown (28) with respect to the closure element (21).

2. The tubular electromechanical actuator (11) for a closure or sun protection home automation installation according to claim 1, **characterized in that** the closure element (21) is a monobloc part and **in that** the closure element (21) comprises a first part (21a) configured to cooperate with the casing (17) and a second part (21b) configured to cooperate with a support (23).

3. The tubular electromechanical actuator (11) for a closure or sun protection home automation installation according to claim 1 or claim 2, **characterized in that** the stop (58) of the crown (28) is formed by a rib extending radially from an inner surface (28a) of the crown (28) toward a longitudinal axis (X28) of the crown (28).

4. The tubular electromechanical actuator (11) for a closure or sun protection home automation installation according to claim 3, **characterized in that** the stop (58) of the crown (28) extends axially, along a direction parallel to the longitudinal axis (X28) of the crown (28), and **in that** the stop (58) of the crown (28) has a length (L28) smaller than a distance (D) between a stop (25) of the closure element (21) and an edge (41a) of the indentations (41) of the closure element (21), opposite this stop (25).

5. The tubular electromechanical actuator (11) for a closure or sun protection home automation installation according to claim 4, **characterized in that** the stop (25) of the closure element (21) is configured to cooperate with the casing (17), at the second end (17b) of the casing (17), in the assembled configuration of the electromechanical actuator (11), via the crown (28).

6. The tubular electromechanical actuator (11) for a closure or sun protection home automation installation according to any one of claims 3 to 5, **characterized in that** each clearance (57) of the crown (28) is formed by a hollow arranged in the stop (58) of the crown (28).

7. The tubular electromechanical actuator (11) for a closure or sun protection home automation installation according to any one of claims 1 to 6, **characterized in that** the closure element (21) and the casing (17) are assembled to one another using fastening elements (53).

8. The tubular electromechanical element (11) for a closure or sun protection home automation installation according to claim 7, **characterized in that** the fastening elements (53) are fastening screws, **in that**, in an assembled configuration of the electromechanical actuator (11), the fastening elements (53) pass through passage holes (54) arranged in the casing (17) and are screwed in fastening holes (55) of the closure element (21) and **in that** the fastening elements (53) pass through passage holes (56) arranged in the crown (28).

9. A home automation installation for closing or providing sun protection that comprises a screen (2) able to be wound on a winding tube (4) rotated by a tubular electromechanical actuator (11), **characterized in that** the tubular electromechanical actuator (11) is according to any one of claims 1 to 8.

10. A method for assembling a tubular electromechanical actuator (11) for a closure or sun protection home automation installation,
the electromechanical actuator (11) comprising at least:
- an electric motor (16),
- a casing (17), the casing (17) being hollow and configured to house at least the electric motor (16), the casing (17) comprising a first end (17a) and a second end (17b), the second end (17b) being opposite the first end (17a),
- a closure element (21), the closure element (21) being configured to close off the second end (17b) of the casing (17), the closure element (21) comprising indentations (41) configured to cooperate with recesses (42) of the casing (17), the recesses (42) being arranged at the second end (17b) of the casing (17), and
- a crown (28), the crown (28) being positioned at least around the casing (17) and at the second end (17b) of the casing (17), the crown (28) being a monobloc part,
the method comprising at least the following steps:
- assembling the crown (28) relative to the closure element (21), and
- assembling the casing (17) relative to the closure element (21) and the crown (28),
**characterized in that** the method also comprises at least:
- during the step for assembling the crown (28) relative to the closure element (21), a step for positioning clearances (57) of the crown (28) relative to the indentations (41) of the closure element (21), a first step for moving the crown (28) relative to the closure element (21) by a translational movement (T) of the clearances (57) of the crown (28) relative to the indentations (41) of the closure element (21), then a second step for moving the crown (28) relative to the closure element (21) by a rotational movement (R), so as to block the translation of the crown (28) with respect to the closure element (21) by causing a stop (58) of the crown (28) to bear against the indentations (41) of the closure element (21), and
- during the step for assembly of the casing (17) relative to the closure element (21) and the crown (28), a step for insertion of the casing (17) between the closure element (21) and the crown (28), then a step for introduction of the indentations (41) of the closure element (21) inside recesses (42) arranged at the second end (17b) of the casing (17).
